# EUROPÄISCHE PATENTSCHRIFT

(11) **EP 2 554 451 B1**
(45) Veröffentlichungstag und Bekanntmachung des Hinweises auf die Patenterteilung: **10.09.2014**
(21) Anmeldenummer: 12450022.4
(22) Anmeldetag: 16.04.2012
(51) Int. Cl.: B61B 7/06, B65G 15/00, B65G 17/02, B65G 21/04

(54) **Förderanlage zum Transport von Schüttgütern**
Transport assembly for conveying bulk goods
Dispositif pour transporter des matières en vrac

(30) Priorität: 04.08.2011 AT 11312011
(43) Veröffentlichungstag der Anmeldung: 06.02.2013
(73) Patentinhaber: Innova Patent GmbH, 6922 Wolfurt (AT)
(72) Erfinder: Trieb, Herbert, 6911 Lochau (AT)
(74) Vertreter: Beer & Partner Patentanwälte KG

(56) Entgegenhaltungen:
- EP-A1- 1 295 817
- EP-A1- 1 452 466
- EP-A2- 0 876 972
- EP-A2- 2 030 919

## Beschreibung

Die gegenständliche Erfindung betrifft eine Förderanlage zum Transport von Schüttgütern mit drei Paaren von jeweils angenähert vertikal übereinander befindlichen Tragseilen und mit einem in sich geschlossenen Förderband, welches auf den mittleren Tragseilen und auf den unteren Tragseilen zwischen einer Ladestation und einer Entladestation bewegbar und in der Ladestation sowie in der Entladestation über Umlenktrommeln geführt ist, weiters mit in Längsrichtung der Förderanlage voneinander im Abstand befindlichen Tragrahmen, mittels welcher die Tragseile miteinander verbunden sind und mit einem Wartungsfahrzeug, welches längs der beiden oberen Tragseile verfahrbar ist und welches an seinen beiden Seiten mit jeweils mindestens einer Wartungsbühne, welche sich seitlich außerhalb der Tragseile befindet, ausgebildet ist.

Es ist bei Förderanlagen zum Transport von Schüttgütern mittels eines in sich geschlossenen Förderbandes bekannt, diese mit einem Wartungsfahrzeug auszustatten, welches längs der Förderanlage verfahrbar ist und welches dazu dient, die Förderanlage über ihre gesamte Länge zu inspizieren und zu warten bzw. Reparaturarbeiten vornehmen zu können.

Bei derartigen Förderanlagen zum Transport von Schüttgütern wird das in sich geschlossene Förderband mittels Tragrollen auf den mittleren Tragseilen und auf den unteren Tragseilen verfahren und wird das Wartungsfahrzeug mittels Laufrädern auf dem oberen Paar der Tragseile verfahren.

Bekannte derartige Wartungsfahrzeuge bestehen aus einem mit Laufrädern ausgebildeten Fahrgestell, welches auf den oberen Tragseilen verfahrbar ist und welches mit mindestens einem Antriebsaggregat und mit zwei Wartungsbühnen ausgebildet ist. Dabei befinden sich die beiden Wartungsbühnen auf beiden Seiten des Fahrgestells, wobei sie sich angenähert über die gesamte Höhe der Förderanlage erstrecken. Das mindestens eine Antriebsaggregat, durch welches am Wartungsfahrzeug vorgesehene Antriebsräder angetrieben werden, befindet sich am Fahrgestell im Bereich der Antriebsräder. Die Antriebsräder wirken mit einem weiters in der Förderanlage vorgesehenen, in Förderrichtung nicht bewegten Antriebsseil zusammen.

Diese bekannte Ausbildung eines Wartungsfahrzeuges entspricht jedoch deshalb nicht den technischen Erfordernissen, da sich dessen Schwerpunkt aufgrund des großen Gewichtes des mindestens einen Antriebsaggregates und des vergleichsweise geringen Gewichtes der beiden seitlichen Wartungsbühnen in dessen oberem Bereich befindet, weswegen das Wartungsfahrzeug keine hinreichende Lagestabilität aufweist.

Der gegenständlichen Erfindung liegt somit die Aufgabe zugrunde, bei einer Förderanlage mit einem Förderband das Wartungsfahrzeug so auszubilden, dass der vorstehend erläuterte, bei bekannten Wartungsfahrzeugen bestehende Nachteil vermieden wird. Dies wird erfindungsgemäß dadurch erzielt, dass das Wartungsfahrzeug an mindestens einer der beiden Seiten zudem mit jeweils mindestens einem Traggestell ausgebildet ist, auf welchem sich mindestens ein Antriebsaggregat für die Bewegung des Wartungsfahrzeuges befindet, wobei sich das auf dem mindestens einen Traggestell angeordnete Antriebsaggregat seitlich außerhalb der Tragseile und unterhalb des Fahrgestelles des Wartungsfahrzeuges befindet.

Dabei kann sich das mindestens eine Traggestell für mindestens ein Antriebsaggregat in Bewegungsrichtung des Wartungsfahrzeuges neben einer der Wartungsbühnen befinden. Weiters kann sich das mindestens eine Traggestell für mindestens ein Antriebsaggregat im unteren Bereich einer Wartungsbühne befinden.

Vorzugsweise befindet sich das mindestens eine Traggestell für mindestens ein Antriebsaggregat in Bewegungsrichtung des Wartungsfahrzeuges neben einer Wartungsbühne und im Abstand von dieser. Nach einer weiters bevorzugten Ausführungsform sind die Wartungsbühnen und das mindestens eine Traggestell für ein Antriebsaggregat in ihren oberen Bereichen am Fahrgestell des Wartungsfahrzeuges um zumindest angenähert horizontal und quer zu den Tragseilen ausgerichtete Achsen verschwenkbar gelagert.

Vorzugsweise befinden sich die jeweils auf einer Seite des Wartungsfahrzeuges mindestens eine Wartungsbühne und das mindestens eine Traggestell für mindestens ein Antriebsaggregat voneinander in seitlichen Abständen und sind sie über mindestens eine Strebe miteinander gelenkig verbunden.

Nach einer bevorzugten Ausführungsform ist durch das mindestens eine Antriebsaggregat mindestens ein am Wartungsfahrzeug befindliches Antriebsrad antreibbar, welches mit einem in der Förderanlage befindlichen und sich längs der Tragseile erstreckenden Antriebsseil zur Bewegung des Wartungsfahrzeuges längs der Förderanlage zusammenwirkt. Insbesondere ist mindestens ein mit einem Antriebsaggregat gekuppeltes Antriebsrad vom Antriebsseil umschlungen. Dabei können mehrere von dem mindestens einen Antriebsaggregat angetriebene Antriebsräder vorgesehen sein, welche vom Antriebsseil umschlungen sind.

Weiters ist vorzugsweise das Förderband mit seitlich angeordneten Tragrollen ausgebildet, welche auf den beiden mittleren Tragseilen sowie den beiden unteren Tragseilen abrollen, und ist das Wartungsfahrzeug mit Laufrollen ausgebildet, welche auf den beiden oberen Tragseilen abrollen. Dabei können die Laufrollen des Wartungsfahrzeuges mit einem Entgleisungsschutz ausgebildet sein.

Nach einer bevorzugten Ausführungsform ist das mindestens eine Antriebsaggregat durch einen Verbrennungskraftmotor gebildet, durch welchen eine Ölpumpe angetrieben wird, wobei durch die Ölpumpe mindestens ein mit dem mindestens einen Antriebsrad auf Verdrehung gekuppelter Ölmotor betrieben wird. Vorzugsweise ist weiters das Wartungsfahrzeug mit mindestens einer sich in dessen Bewegungsrichtung erstreckenden Tragkonsole versehen, auf welcher der mindestens eine Ölmotor angeordnet ist.
Zudem ist vorzugsweise der mindestens eine Ölmotor mittels einer von diesem quer abragenden und mit dem abgewandten Ende an der Tragkonsole befestigten Stütze gegen dessen Verdrehung gegenüber der Tragkonsole gesichert.

Eine erfindungsgemäße Förderanlage zum Transport von Schüttgütern ist nachstehend anhand eines in der Zeichnung dargestellten Ausführungsbeispieles näher erläutert. Es zeigen:
- FIG.1: einen Abschnitt einer erfindungsgemäßen Förderanlage mit einem Wartungsfahrzeug, in axonometrischer Darstellung,
- FIG.2: ein Detail des Wartungsfahrzeuges gemäß FIG.1,
- FIG.3: das Wartungsfahrzeug gemäß FIG.1, in Seitenansicht,
- FIG.4: das Wartungsfahrzeug gemäß FIG.1, in Vorderansicht, und
- FIG.5: das Wartungsfahrzeug gemäß FIG.1, in Draufsicht.

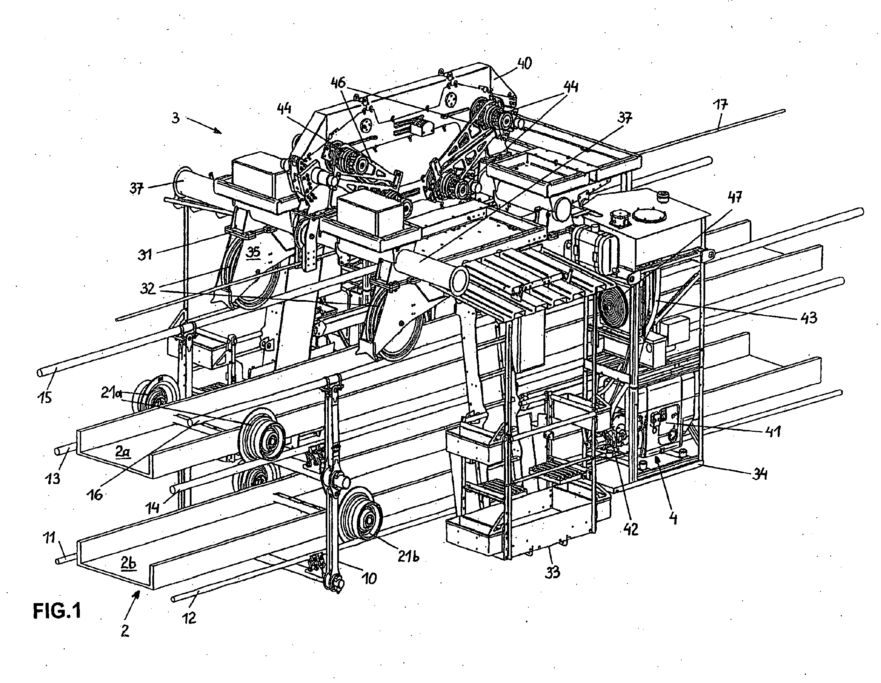

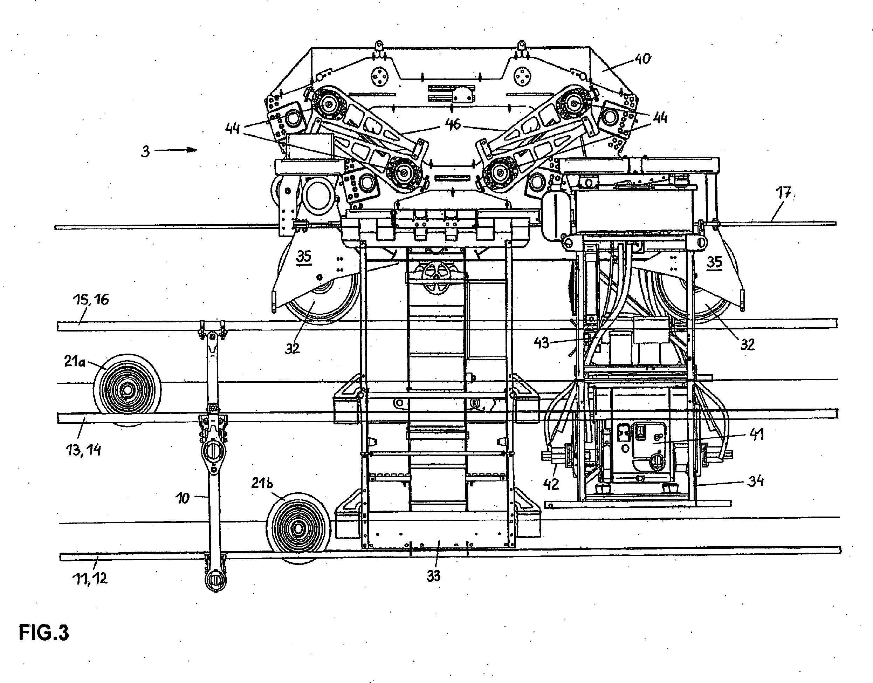

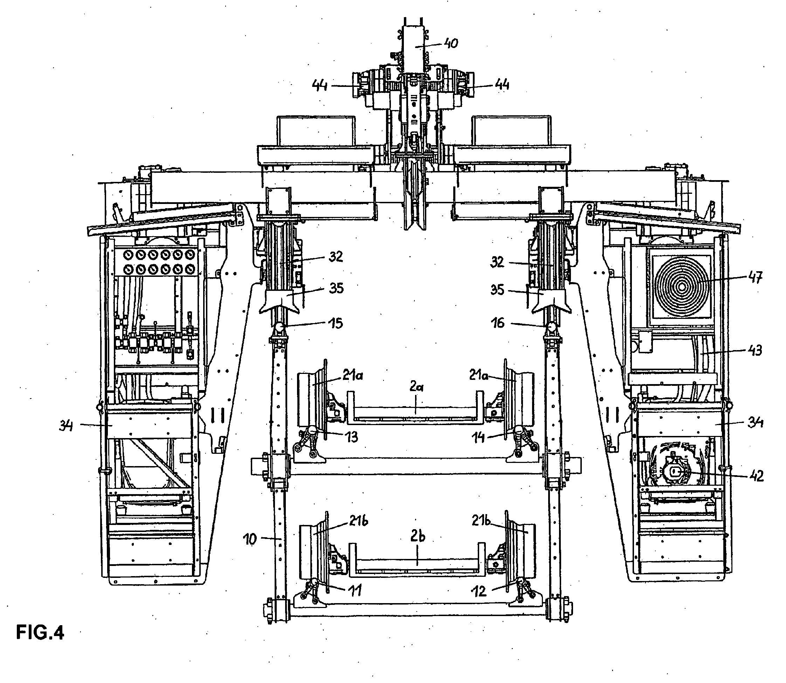

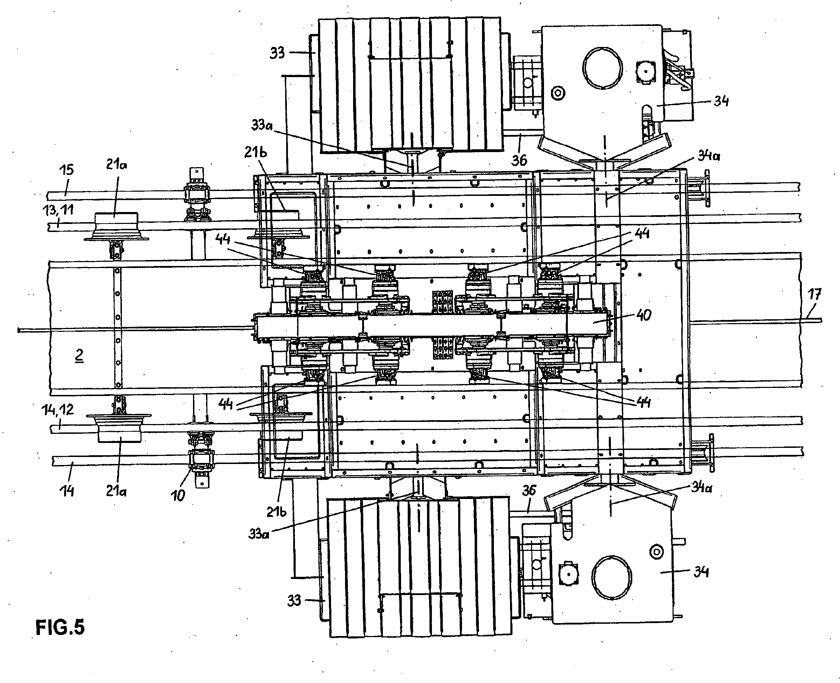

Wie dies aus den FIG.1 bis FIG.5 ersichtlich ist, weist eine Förderanlage für Schüttgüter drei Paare von Tragseilen 11 und 12, 13 und 14, 15 und 16 auf, wobei längs der Tragseile 11 und 12 sowie 13 und 14 ein Förderband 2, welches mit einer Vielzahl von Tragrollen 21a und 21b ausgebildet ist, bewegbar ist. In der Ladestation und in der Entladestation ist das Förderband 2 über Umlenktrommeln geführt, von welchen wenigstens eine derselben zur Bewegung des Förderbandes 2 antreibbar ist. Weiters sind in Bewegungsrichtung des unteren Trumes 26 des Förderbandes 2 nach der Entladestation und vor der Ladestation jeweils eine Wendeeinrichtung vorgesehen, durch welche das untere Trum 2b des Förderbandes 2 nach der Entladestation nach oben gewendet wird und vor der Ladestation wieder zurückgewendet wird. Hierdurch wird erzielt, dass das zur Ladestation zurückbewegte untere Trum 2b des Förderbandes 2 nach oben gewendet ist, wodurch verhindert wird, dass auf diesem nach der Entladestation verbliebene Anteile an Fördergut nach unten abfallen.

Auf den mittleren Tragseilen 13 und 14 wird das mit einem Schüttgut beladene obere Trum 2a des Förderbandes 2 mittels der an diesem gelagerten Tragrollen 21a von der Ladestation zur Entladestation bewegt. Das nach oben gewendete untere Trum 2b des Förderbandes wird mittels der an diesem gelagerten Tragrollen 21b, welche auf den unteren Tragseilen 11 und 12 abrollen, von der Entladestation zur Ladestation zurückbewegt. Längs der oberen Tragseile 15 und 16 ist ein Wartungsfahrzeug 3 verfahrbar. Da die drei Paare der Tragseile 11 bis 16 mittels gelenkig ausgebildeter Tragrahmen 10 miteinander verbunden sind, sind die Tragseile 11 bis 16 in ihren gegenseitigen Lagen stabilisiert.

Das Wartungsfahrzeug 3 weist ein mit Laufrollen 32 ausgebildetes Fahrgestell 31 auf. Die Laufrollen 32 sind längs der beiden oberen Tragseile 15 und 16 verfahrbar. An seinen beiden Seiten ist das Wartungsfahrzeug 3 mit jeweils einer Wartungsbühne 33 ausgebildet, welche sich seitlich außerhalb der Tragseile 11 bis 16 befinden und eine Höhe aufweisen, welche zumindest dem Abstand zwischen den oberen Tragseilen 15 und 16 und den unteren Tragseilen 11 und 12 entspricht. Seitlich neben den Wartungsbühnen 33 befinden sich jeweils ein Traggestell 34 für ein Antriebsaggregat 4, welches zum Antrieb des Wartungsfahrzeuges 3 dient. Jedes Antriebsaggregat 4 ist durch einen Verbrennungskraftmotor 41 gebildet, durch welchen jeweils eine Ölpumpe 42 angetrieben wird. Von den Ölpumpen 42 führen Leitungen 43 zu Ölmotoren 44, durch welche am Fahrgestell 31 befindliche Antriebsräder verdreht werden. Die Antriebsräder sind von einem sich in Längsrichtung der Förderanlage erstreckenden und in Förderrichtung der Anlage nicht bewegten Antriebsseil 17 umschlungen. Durch eine Verdrehung der Antriebsräder ist das Wartungsfahrzeug 3 mittels der Laufrollen 32 längs der oberen Tragseile 15 und 16 verfahrbar. Die Laufrollen 32 sind mit Schutzblechen 35 als Entgleisungsschutz ausgebildet.

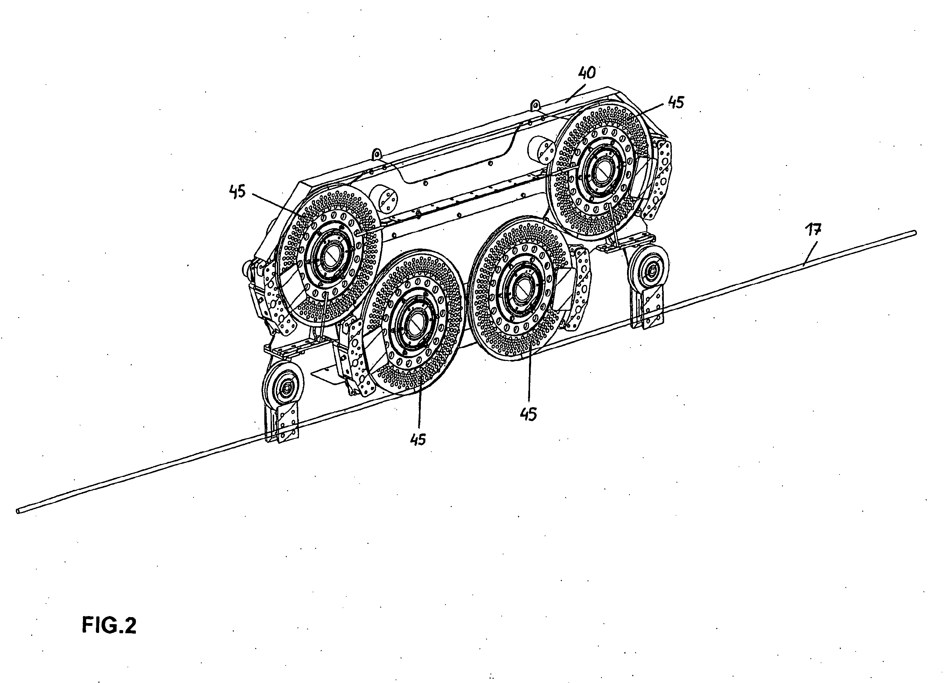

In FIG.2 sind das Antriebsseil 17 und vier an einer Tragkonsole 40 des Fahrgestells 31 gelagerte Antriebsräder 45, welche von den Ölmotoren 44 verdreht werden, dargestellt. Wie daraus ersichtlich ist, sind die Antriebsräder 45 einerseits in Bewegungsrichtung des Wartungsfahrzeuges 3 und andererseits in ihrer Höhenlage gegeneinander versetzt angeordnet, wobei sie vom Antriebsseil 17 mäanderförmig umschlungen werden. Durch diese Ausbildung ist eine weitgehend schlupffreie Kupplung des Wartungsfahrzeuges 3 mit dem Antriebsseil 17 gewährleistet.

Die beiden Wartungsbühnen 33 sind am Fahrgestell 31 auf horizontal ausgerichteten ersten Achsen 33a gelagert. Hierdurch nehmen die Wartungsbühnen 33 auch bei einem gegenüber der Horizontalen geneigten Verlauf der Tragseile 11 bis 16 immer eine vertikale Lage ein. In gleicher Weise sind die Traggestelle 34 für die Antriebsaggregate 4 am Fahrgestell 31 auf horizontal ausgerichteten zweiten Achsen 34a verschwenkbar gelagert, wodurch sie bei einem geneigten Verlauf der Tragseile 11 bis 16 gleichfalls eine vertikale Lage einnehmen. Die Wartungsbühnen 33 und die Traggestelle 34 sind mittels an diesen verschwenkbar angelenkten Streben 36 voneinander im Abstand gehalten.

An der Oberseite des Fahrgestelles 31 ist dieses mit der sich in Längsrichtung erstreckenden Tragkonsole 40 ausgebildet, auf welcher sich die Ölmotoren 44 befinden, durch welche die Antriebsräder 45 verdreht werden. Die Ölmotoren 44 sind mit quer abragenden Drehmomentstützen 46 ausgebildet, deren von den Ölmotoren 44 abliegenden Enden an der Konsole 40 befestigt sind, wodurch die Ölmotoren 44 gegenüber deren Verdrehung gesichert sind. Im Kreislauf der Ölpumpen 42 und der Ölmotoren 44 sind Ölkühleinrichtungen 47 vorgesehen. Weiters ist das Wartungsfahrzeug mit Tragrohren 37 ausgebildet, welche Trageinrichtungen für Werkzeuge, Arbeitsgeräte u.dgl. bilden, welche für Wartungs- bzw. Reparaturarbeiten u.dgl. benötigt werden.

Da sich die auf den Traggestellen 34 angeordneten Antriebsaggregate 4, welche ein sehr großes Gewicht aufweisen, unterhalb der Tragseile 15 und 16 und unterhalb der Laufrollen 32 befinden, liegt der Schwerpunkt des Wartungsfahrzeuges 3 weit unterhalb der Laufrollen 32 des Wartungsfahrzeuges 3, wodurch dieses eine gegenüber bekannten Wartungsfahrzeugen wesentlich verbesserte Stabilität aufweist.

## Patentansprüche

1. Förderanlage zum Transport von Schüttgütern mit drei Paaren von jeweils angenähert vertikal übereinander befindlichen Tragseilen (11 bis 16) und mit einem in sich geschlossenen Förderband (2), welches längs der mittleren Tragseile (13 und 14) sowie der unteren Tragseile (11 und 12) zwischen einer Ladestation und einer Entladestation bewegbar und in der Ladestation sowie in der Entladestation über Umlenktrommeln geführt ist, weiters mit in Längsrichtung der Förderanlage voneinander im Abstand befindlichen Tragrahmen (10), mittels welcher die Tragseile (11 bis 16) miteinander verbunden sind und mit einem Wartungsfahrzeug (3), welches längs der beiden oberen Tragseile (15 und 16) verfahrbar ist und welches an seinen beiden Seiten mit jeweils mindestens einer Wartungsbühne (33), welche sich seitlich außerhalb der Tragseile (11 bis 16) befindet, ausgebildet ist, **dadurch gekennzeichnet, dass** das Wartungsfahrzeug (3) an mindestens einer der beiden Seiten zudem mit jeweils mindestens einem Traggestell (34) ausgebildet ist, auf welchem sich mindestens ein Antriebsaggregat (4) für die Bewegung des Wartungsfahrzeuges (3) befindet, wobei sich das auf dem mindestens einen Traggestell (34) angeordnete Antriebsaggregat (4) seitlich außerhalb der Tragseile (11 bis 16) und unterhalb des Fahrgestelles des Wartungsfahrzeuges (3) befindet.

2. Förderanlage nach Patentanspruch 1, **dadurch gekennzeichnet, dass** sich das mindestens eine Traggestell (34) für mindestens ein Antriebsaggregat (4) in Bewegungsrichtung des Wartungsfahrzeuges (3) neben einer der Wartungsbühnen (33) befindet.

3. Förderanlage nach Patentanspruch 1, **dadurch gekennzeichnet, dass** sich das mindestens eine Traggestell (34) für mindestens ein Antriebsaggregat (4) im unteren Bereich einer Wartungsbühne (33) befindet.

4. Förderanlage nach Patentanspruch 2, **dadurch gekennzeichnet, dass** sich das mindestens eine Traggestell (34) für mindestens ein Antriebsaggregat (4) in Bewegungsrichtung des Wartungsfahrzeuges (3) neben einer Wartungsbühne (33) und im Abstand von dieser befindet.

5. Förderanlage nach einem der Patentansprüche 2 und 4, **dadurch gekennzeichnet, dass** die Wartungsbühnen (33) und das mindestens eine Traggestell (34) für ein Antriebsaggregat (4) in ihren oberen Bereichen am Fahrgestell (31) des Wartungsfahrzeuges (3) um zumindest angenähert horizontal und quer zu den Tragseilen (11 bis 16) ausgerichtete Achsen (33a, 34a) verschwenkbar gelagert sind.

6. Förderanlage nach einem der Patentansprüche 4 und 5, **dadurch gekennzeichnet, dass** sich die jeweils auf einer Seite des Wartungsfahrzeuges (3) befindliche mindestens eine Wartungsbühne (33) und das mindestens eine Traggestell (34) für mindestens ein Antriebsaggregat (4) voneinander in seitlichen Abständen befinden und über mindestens eine Strebe (36) miteinander gelenkig verbunden sind.

7. Förderanlage nach einem der Patentansprüche 1 bis 6, **dadurch gekennzeichnet, dass** durch das mindestens eine Antriebsaggregat (4) mindestens ein am Wartungsfahrzeug (3) befindliches Antriebsrad (45) antreibbar ist, welches mit einem in der Förderanlage befindlichen und sich längs der Tragseile (11 bis 16) erstreckenden Antriebsseil (17) zur Bewegung des Wartungsfahrzeuges (3) längs der Förderanlage zusammenwirkt.

8. Förderanlage nach Patentanspruch 7, **dadurch gekennzeichnet, dass** mindestens ein mit einem Antriebsaggregat (4) gekuppeltes Antriebsrad (45) vom Antriebsseil (17) umschlungen ist.

9. Förderanlage nach einem der Patentansprüche 7 und 8, **dadurch gekennzeichnet, dass** mehrere von dem mindestens einen Antriebsaggregat (4) angetriebene Antriebsräder (45) vorgesehen sind, welche vom Antriebsseil (17) umschlungen sind.

10. Förderanlage nach einem der Patentansprüche 1 bis 9, **dadurch gekennzeichnet, dass** das Förderband (2) mit seitlich angeordneten Tragrollen (21a, 21b) ausgebildet ist, welche auf den beiden mittleren Tragseilen (13 und 14) sowie den beiden unteren Tragseilen (11 und 12) abrollen, und dass das Wartungsfahrzeug (3) mit Laufrollen (32) ausgebildet ist, welche auf den beiden oberen Tragseilen (15 und 16) abrollen.

11. Förderbahnanlage nach Patentanspruch 10, **dadurch gekennzeichnet, dass** die Laufrollen (32) des Wartungsfahrzeuges (3) mit einem Entgleisungsschutz (35) ausgebildet sind.

12. Förderanlage nach einem der Patentansprüche 1 bis 11, **dadurch gekennzeichnet, dass** das mindestens eine Antriebsaggregat (4) durch einen Verbrennungskraftmotor (41) gebildet ist, durch welchen eine Ölpumpe (42) angetrieben wird, wobei durch die Ölpumpe (42) mindestens ein mit dem mindestens einen Antriebsrad (45) auf Verdrehung gekuppelter Ölmotor (44) angetrieben wird.

13. Förderanlage nach Patentanspruch 12, **dadurch gekennzeichnet, dass** das Wartungsfahrzeug (3) mit mindestens einer sich in dessen Bewegungsrichtung erstreckenden Tragkonsole (40) versehen ist, auf welcher der mindestens eine Ölmotor (44) angeordnet ist.

14. Förderanlage nach Patentanspruch 13, **dadurch gekennzeichnet, dass** der mindestens eine Ölmotor (44) mittels einer von diesem quer abragenden und mit dem abgewandten Ende an der Tragkonsole (40) befestigten Stütze (46) gegen dessen Verdrehung gegenüber der Tragkonsole (40) gesichert ist.

## Claims

1. A conveying installation for transporting bulk materials, having three pairs of supporting cables (11 to 16) located in each case approximately vertically one above the other and having an endless conveyor belt (2), which is movable along the middle supporting cables (13 and 14) and the lower supporting cables (11 and 12) between a loading station and a discharge station and is guided over return drums in both the loading station and the discharge station, and also halving supporting frames (10) spaced from one another in the longitudinal direction of the conveying installation, said supporting frames (10) connecting together the supporting cables (11 to 16), and having a maintenance vehicle (3), which is capable of travelling along the upper two supporting cables (15 and 16) and which is provided at each of its two sides with at least one maintenance platform (33), which is located laterally outside the supporting cables (11 to 16), **characterised in that** the maintenance vehicle (3) is additionally provided at at least one of the two sides with in each case at least one supporting structure (34), on which at least one drive unit (4) is located for moving the maintenance vehicle (3), wherein the drive unit (4) arranged on the at least one supporting structure (34) is located laterally outside the supporting cables (11 to 16) and underneath the running gear of the maintenance vehicle (3).

2. A conveying installation according to claim 1, **characterised in that** in the direction of movement of the maintenance vehicle (3) the at least one supporting structure (34) for at least one drive unit (4) is located next to one of the maintenance platforms (33).

3. A conveying installation according to claim 1, **characterised in that** the at least one supporting structure (34) for at least one drive unit (4) is located in the lower region of a maintenance platform (33).

4. A conveying installation according to claim 2, **characterised in that** in the direction of movement of the maintenance vehicle (3) the at least one supporting structure (34) for at least one drive unit (4) is located next to a maintenance platform (33) and at a distance therefrom.

5. A conveying installation according to either one of claims 2 and 4, **characterised in that** the maintenance platform (33) and the at least one supporting structure (34) for a drive unit (4) are mounted in their upper regions on the running gear (31) of the maintenance vehicle (3) so as to be pivotably about axes (33a, 34a) oriented at least approximated horizontally and transversely relative to the supporting cables (11 to 16).

6. A conveying installation according to either one of claims 4 and 5, **characterised in that** the at least one maintenance platform (33) located in each case on one side of the maintenance vehicle (3) and the at least one supporting structure (34) for at least one drive unit (4) are spaced laterally from one another and are joined together in articulated manner via at least one strut (36).

7. A conveying installation according to any one of claims 1 to 6, **characterised in that** at least one drive wheel (45) located on the maintenance vehicle (3) is drivable by the at least one drive unit (4), which drive wheel interacts with a drive cable (17) located in the conveying installation and extending along the supporting cables (11 to 16) to move the maintenance vehicle (3) along the conveying installation.

8. A conveying installation according to claim 7, **characterised in that** the drive cable (17) is wrapped aground at least one drive wheel (45) coupled to a drive unit (4).

9. A conveying installation according to either one of claims 7 and 8, **characterised in that** a plurality of drive wheels (45) driven by the at least one drive unit (4) are provided, around which the drive cable (17) is wrapped.

10. A convening installation according to any one of claims 1 to 9, **characterised in that** the conveyor belt (2) is provided with laterally arranged supporting rollers (21a, 21b), which roll on the middle two supporting cables (13 and 14) and the lower two supporting cables (11 and 12), and **in that** the maintenance vehicle (3) is provided with running rollers (32) which roll on the upper two supporting cables (15 and 16).

11. A conveying installation according to claim 10, **characterised in that** the running rollers (32) of the maintenance vehicle (3) are provided with a derailment guard (35).

12. A conveying installation according to any one of claims 1 to 11, **characterised in that** the at least one drive unit (4) is formed by an internal combustion engine (41), by which an oil pump (42) is driven, wherein the oil pump (42) drives at least one oil engine (44) coupled for rotation with the at least one drive wheel (45).

13. A conveying installation according to claim 12, **characterised in that** the maintenance vehicle (3) is provided with at least one supporting bracket (40) extending in the direction of movement thereof, on which the at least one oil engine (44) is arranged.

14. A conveying installation according to claim 13, **characterised in that** the at least one oil engine (44) is secured against rotation thereof relative to the supporting bracket (40) by means of a support (46) projecting perpendicularly from said oil engine and fastened with its remote end to the supporting bracket (40).

## Revendications

1. Transporteur pour le transport de matières en vrac, avec trois paires de câbles porteurs (11 à 16) qui se trouvent les uns au-dessus des autres à peu près verticalement, et avec une bande transporteuse sans fin (2) qui est apte à être déplacée le long des câbles porteurs du milieu (13 et 14) et des câbles porteurs inférieurs (11 et 12) entre une station de chargement et une station de déchargement et qui, dans la station de chargement et dans la station de déchargement, passe sur des tambours de renvoi, et aussi avec des châssis porteurs (10) qui sont espaces les uns des autres dans le sens longitudinal du transporteur et à l'aide desquels les câbles porteurs (11 à 16) sont reliés, et avec un véhicule de maintenance (3) qui est mobile le long des deux câbles porteurs supérieurs (15 et 16) et qui est pourvu, sur chaque côté, d'au moins une plate-forme de maintenance (33) située sur le côté et à l'extérieur des câbles porteurs (11 à 16),
**caractérisé en ce que** le véhicule de maintenance (3) est également pourvu, sur l'un au moins des deux côtés, d'au moins un cadre porteur (34) sur lequel se trouve au moins un groupe propulseur (4) pour le déplacement du véhicule de maintenance (3), étant précisé que le groupe propulseur (4) disposé sur le ou les cadres porteurs (34) se trouve sur le côté et à l'extérieur des câble porteurs (11 à 16) et au-dessous du châssis de roulement du véhicule de maintenance (3).

2. Transporteur selon la revendication 1, **caractérisé en ce que** le ou les cadres porteurs (34) pour au moins un groupe propulseur (4) se trouvent près des plates-formes de maintenance (33), dans le sens de déplacement du véhicule de maintenance (3).

3. Transporteur selon la revendication 1, **caractérisé en ce que** le ou les cadres porteurs (34) pour au moins un groupe propulseur (4) se trouvent dans la zone inférieure d'une plate-forme de maintenance (33).

4. Transporteur selon la revendication 2, **caractérisé en ce que** le ou les cadres porteurs (34) pour au moins un groupe propulseur (4) se trouvent près d'une plate-forme de maintenance (33) dans le sens de déplacement du véhicule de maintenance (3) et sont espacés de ladite plate-forme.

5. Transporteur selon l'une des revendications 2 et 4, **caractérisé en ce que** dans leur zone supérieure, les plates-formes de maintenance (33) et le ou les cadres porteurs (34) pour un groupe propulseur (4) sont montés sur le châssis de roulement (31) du véhicule de maintenance (3) pour pouvoir pivoter sur des axes (33a, 34a) orientés au moins approximativement horizontalement et transversalement par rapport aux câbles porteurs (11 à 16).

6. Transporteur selon l'une des revendications 4 et 5, **caractérisé en ce que** la ou les plates-formes (33) qui se trouvent sur un côté du véhicule de maintenance (3), et le ou les cadres porteurs (34) pour au moins un groupe propulseur (4) sont espacés latéralement et sont reliés de manière articulée à l'aide d'une entretoise (36).

7. Transporteur selon l'une des revendications 1 à 6, **caractérisé en ce que** le ou les groupes propulseurs (4) permettent d'entraîner au moins une roue d'entraînement (45), située sur le véhicule de maintenance (3), qui coopère avec un câble d'entraînement (17) situé sur le transporteur et s'étendant le long des câbles porteurs (11 à 16), pour déplacer le véhicule de maintenance (3) le long du transporteur.

8. Transporteur selon la revendication 7, **caractérisé en ce que** le câble d'entraînement (17) passe sur au moins une roue d'entraînement (45) accouplée à un groupe propulseur (4).

9. Transporteur selon l'une des revendications 7 et 8, **caractérisé en ce qu'**il est prévu plusieurs roues d'entraînement (45) entraînées par le ou les groupes propulseurs (4), sur lesquelles passe le câble d'entraînement (17).

10. Transporteur selon l'une des revendications 1 à 9, **caractérisé en ce que** la bande transporteuse (2) est pourvue de rouleaux porteurs (21a, 21b), disposés sur les côtés, qui roulent sur les deux câbles porteurs du milieu (13 et 14) et sur les deux câbles porteurs inférieurs (11 et 12), et **en ce que** le véhicule de maintenance (3) est pourvu de rouleaux de roulement (32) qui roulent sur les deux câbles porteurs supérieurs (15 et 16).

11. Transporteur selon la revendication 10, **caractérisé en ce que** les rouleaux de roulement (32) du véhicule de maintenance (3) sont pourvus d'une protection antidéraillement (35).

12. Transporteur selon l'une des revendications 1 à 11, **caractérisé en ce que** le ou les groupes propulseurs (4) sont formés par un moteur à combustion interne (41) grâce auquel une pompe à huile (42) est entraînée, étant précisé que grâce à ladite pompe à huile (42), au moins un moteur hydraulique (44) accouplé en rotation à la roue ou aux roues d'entraînement (45) est entraîné.

13. Transporteur selon la revendication 12, **caractérisé en ce que** le véhicule de maintenance (3) est pourvu d'au moins une console porteuse (40) qui s'étend dans le sens de déplacement dudit véhicule (3) et sur laquelle est disposé ledit moteur hydraulique (44).

14. Transporteur selon la revendication 13, **caractérisé en ce que** le ou les moteurs hydrauliques (44) sont protégés à l'encontre d'une rotation par rapport à la console porteuse (40) à l'aide d'un support (46) qui dépasse transversalement du ou des moteurs hydrauliques (44) et qui est fixé avec l'extrémité opposée à la console porteuse (40).
